# EUROPÄISCHE PATENTSCHRIFT

(11) **EP 4 021 188 B1**
(45) Veröffentlichungstag und Bekanntmachung des Hinweises auf die Patenterteilung: **08.10.2025**
(21) Anmeldenummer: 20746136.9
(22) Anmeldetag: 21.07.2020
(51) Int. Cl.: A21B 1/10, A21B 1/48

(54) **DURCHLAUF-BACKOFEN FÜR DEN KONTINUIERLICHEN BACKBETRIEB**
ONCE-THROUGH BAKING OVEN FOR CONTINUOUS BAKING OPERATION
FOUR DE CUISSON À PASSAGE UNIQUE POUR UNE OPÉRATION DE CUISSON CONTINUE

(30) Priorität: 28.08.2019 DE 102019212937
(43) Veröffentlichungstag der Anmeldung: 06.07.2022
(73) Patentinhaber: Werner & Pfleiderer Industrielle Backtechnik GmbH, 71732 Tamm (DE)
(72) Erfinder: KNOST, Dieter, 91550 Dinkelsbühl (DE)
(74) Vertreter: Rau, Schneck & Hübner Patentanwälte Rechtsanwälte PartGmbB
(86) Internationale Anmeldenummer: PCT/EP2020/070569
(87) Internationale Veröffentlichungsnummer: WO 2021/037444

(56) Entgegenhaltungen:
- WO-A1-82/03681
- US-A- 3 548 514

## Beschreibung

Die Erfindung betrifft einen Durchlauf-Backofen für den kontinuierlichen Backbetrieb.

Ein derartiger Durchlauf-Backofen ist bekannt aus der DE 1 095 223 A, der DE 26 29 716 A1 und der US 1,832,374. Die DE 198 20 061 A1 beschreibt einen Backofen mit mehreren hintereinander angeordneten Ofen-Modulen, die jeweils mehrere übereinander angeordnete Herde aufweisen. Die WO 82/03681 A1 offenbart einen Tunnelofen, der mittels Thermoöl beheizt ist. Die US 3,548,514 offenbart einen Backofen mit Strahlungs-Heizmitteln und konvektiven Heizmitteln.

Es ist eine Aufgabe der vorliegenden Erfindung, einen Durchlauf-Backofen der eingangs genannten Art so weiterzubilden, dass er effizient und angepasst an unterschiedliche Durchsatzanforderungen betrieben werden kann.

Diese Aufgabe ist erfindungsgemäß gelöst durch einen Durchlauf-Backofen mit den im Anspruch 1 angegebenen Merkmalen.

Erfindungsgemäß wurde erkannt, dass eine Wärmetauscher-Heizeinrichtung mit einer Wärmetauscher-Heizeinrichtung mit benachbarten Wärmetauscher-Rohren, in denen das Heizmedium in einander entgegengesetzter Strömungsrichtung fließt, zur Möglichkeit führt, eine Wärmeabgabe der Radiator-Rohranordnung, zu der diese Wärmetauscher-Rohre gehören, um Backraum hin zu vergleichmäßigen. Dies verbessert das Backergebnis und ermöglicht die Vorgabe einer einheitlichen Temperaturzone über die zugehörige Radiator-Rohranordnung. Diese "Gegenstrom"-Anordnung der Wärmetauscher-Rohre vergleichmäßigt also die Wärmeabstrahlung über eine insbesondere beliebig groß ausführbare Fläche der Radiator-Rohranordnung. Eine Temperaturverteilung über eine Breite des Backraums und/oder über eine Länge des Backraums kann vergleichmäßigt werden. Eine Temperaturverteilung an den Strahlungs- beziehungsweise Radiatorflächen des Durchlauf-Backofens kann optimiert werden, kann also an eine Vorgabe-Temperaturverteilung angepasst werden.

Ein Rohrquerschnitt der Wärmetauscher-Rohre kann rund sein, kann aber abschnittsweise oder insgesamt auch von einer runden Form abweichen. Die Wärmetauscher-Rohre können als Hohlprofile jeglicher Geometrie ausgeführt sein, beispielsweise auch mit einem quadratischen, mit einem rechteckigen, trapezförmigen oder auch mehreckigen Querschnitt ausgeführt sein.

Soweit Heizgas als Heizmedium eingesetzt wird, kann zum Erzielen eines vorgegebenen Backergebnisses insgesamt mit einer geringeren Heizgastemperatur gearbeitet werden. Dies verringert eine Schadstoffemission über einen Abgaskamin des Durchlauf-Backofens. Insgesamt wird eine niedrigere Abgastemperatur möglich und es kann Energie durch eine Senkung von Energieverlusten über den Kamin eingespart werden.

Eine Verlängerung eines Heizmedium-Weges durch die Wärmetauscher-Rohre zwischen der Vorlauf-Rohranordnung und der Rücklauf-Rohranordnung ist zur Erzeugung dieser "Gegenstrom"-Anordnung nicht erforderlich.

Der Durchlauf-Backofen kann je nach Ausführung auch eine Mehrzahl von gegebenenfalls übereinander angeordneten Durchlauf-Backräumen aufweisen.

Die Wärmetauscher-Heizeinrichtung dient zur indirekten Beheizung, ohne dass das Heizmedium mit dem Backgut in Kontakt kommt. Die Wärmetauscher-Heizeinrichtung beheizt mindestens einen Modul-Backraumabschnitt. Alternativ kann die Wärmetauscher-Heizeinrichtung auch mehrere oder alle Modul-Backraumabschnitte, also insbesondere den gesamten Durchlauf-Backraum beheizen. Pro Ofenmodul kann genau eine Wärmetauscher-Heizeinrichtung vorgesehen sein. Alternativ ist es möglich, bestimmte Ofenmodule ohne Wärmetauscher-Heizeinrichtung oder auch mit einer Mehrzahl von Wärmetauscher-Heizeinrichtungen auszustatten. Beim Heizmedium kann es sich um ein Heizgas handeln.

Zusätzlich kann mindestens eine über das Heizmedium beheizte Fläche der Wärmetauscher-Heizeinrichtung mit einem Absorber-Material beschichtet sein, welches Wärmestrahlung in einem bevorzugten Wellenlängenbereich wieder abgibt. Bei einer primären Heizquelle zur Beheizung des Heizmediums kann es sich um einen Heizgas-Brenner handeln. Alternativ oder zusätzlich kann eine Heizquelle zum Einsatz kommen, die über einen externen Wärmetauscher Wärme an die Backraumatmosphäre und/oder an das Heizmedium abgibt. Eine derartige Heizquelle kann einen Brenner, einen Ventilator und einen Wärmetauscher aufweisen. Eine derartige Heizquelle kann als externer Energieblock insbesondere zur Aufheizung der Backraumatmosphäre eingesetzt werden.

Bei einer Radiator-Rohranordnung nach Anspruch 2 kommen die Vorteile der vorstehend beschriebenen "Gegenstrom"-Anordnung besonders gut zum Tragen. Es kann dann eine komplette Gegenstrom-Anordnung mit - gesehen quer zur Längserstreckung der Wärmetauscher-Rohre - jeweils wechselnder Fließrichtung des Heizmediums durch die Wärmetauscher-Rohre realisiert sein.

Eine Ausführung der Wärmetauscher-Rohre nach Anspruch 3 ermöglicht eine kostengünstige Fertigung entsprechender Rohrpakete. Die Längen der Wärmetauscher-Rohre innerhalb eines solchen Rohrpaketes müssen nicht exakt gleich sein, sondern können sich aufgrund von Anschlussanforderungen an Vorlauf-/ oder Rücklaufleitungen geringfügig voneinander unterscheiden. Es genügt beispielsweise, wenn sich die Längen der Wärmetauscher-Rohre der jeweiligen Radiator-Rohranordnung um nicht mehr als 10% unterscheiden.

Eine Hauptleitungs-/Stichleitungs-Rohranordnung ermöglicht einen kompakten Aufbau der Wärmetauscher-Heizeinrichtung.

Ausführungen der Radiator-Rohranordnungen nach Anspruch 6 haben sich in der Praxis bewährt. Durch entsprechende Drosselklappen in den Vorlauf- beziehungsweise Rücklauf- Rohranordnungen kann eine Verteilung des Heizmediums zwischen der Oberhitze- und der Unterhitze-Anordnung gewährleistet sein, sodass eine Unterhitze- und eine zugehörige Oberhitze-Anordnung Teil einer gemeinsamen Wärmetauscher-Heizeinrichtung sein können.

Die eingangs genannte Aufgabe ist erfindungsgemäß weiterhin gelöst durch einen Durchlauf-Backofen mit den in Anspruch 7 angegebenen Merkmalen.

Bei einer schnecken- beziehungsweise mäanderförmigen Radiator-Rohranordnung ergibt sich ebenfalls die Möglichkeit eines Heizmedium-Temperaturverlaufs so, dass eine möglichst gleichmäßige Wärmeabstrahlung über die Fläche der Radiator-Rohranordnung resultiert. Die Radiator-Rohranordnung ist zudem kompakt.

Die vorstehend beschriebenen Varianten für den Durchlauf-Backofen mit "Gegenstrom"-Anordnung von Wärmetauscher-Rohren und mit schneckenbeziehungsweise mäanderförmigem Verlauf der Radiator-Rohranordnung können auch in Kombination in einem Durchlauf-Backofen verbaut sein und beispielsweise zu verschiedenen Wärmetauscher-Heizeinrichtungen des Durchlauf-Backofens gehören.

Eine Konvektions-Heizeinrichtung nach Anspruch 8 ermöglicht eine zusätzliche Direktheizung des Backraums. Die Direktheizung kann über Konvektion und/oder über mittels mindestens eines Ventilators getriebener Gasströmung, zum Beispiel einem Heizgas-Kreislauf, erfolgen. Bei einem alternativen Durchlauf-Backofen kann auch ausschließlich eine derartige Direktheizung erfolgen. In diesem Fall entfällt die vorstehend beschriebene Wärmetauscher-Heizeinrichtung.

Eine Anordnung der Wärmetauscher-Rohre nach Anspruch 9 führt zu einer besonders guten Vergleichmäßigung einer Backraumbeheizung. Auch die Konvektions-Heizgas-Rohranordnungen können als Oberhitze- oder als Unterhitze-Anordnungen ausgeführt sein. In diesem Zusammenhang gilt, was vorstehend bereits erläutert wurde.

Durchtrittsöffnungen nach Anspruch 10 haben sich zur Realisierung einer kovektiven Beheizung beziehungsweise einer Direktheizung bewährt.

Die Wärmetauscher-Heizeinrichtung und die Konvektions-Heizeinrichtung beziehungsweise eine Direktheizung über mittels eines Ventilators getriebene Gasströmung können über eine Steuer-/Regeleinrichtung gesteuert beziehungsweise geregelt sein. Für einen Regelbetrieb kann der Durchlauf-Backofen mindestens einen Temperatursensor zur Erfassung einer definierten Temperatur, insbesondere einer Backraumtemperatur aufweisen. Soweit ein geregelter Heizbetrieb über mehrere (Temperatur-)Zonen des Durchlauf-Backraums erfolgen soll, kann in jeder der Zonen ein Temperatursensor vorgesehen sein, sodass ein unabhängiger geregelter Betrieb in den verschiedenen Temperaturzonen möglich ist. Pro Wärmetauscher-Heizeinrichtung und/oder pro Konvektions-Heizeinrichtung und/oder pro Unter- und Oberhitze kann ein derartiger Temperatursensor vorgesehen sein.

Ausführungsbeispiele der Erfindung werden nachfolgend anhand der Zeichnungen erläutert. In dieser zeigen:
- Fig. 1: eine Seitenansicht eines modular aufgebauten Durchlauf-Backofens;
- Fig. 2: schematisch einen Längs-Vertikalschnitt durch einen Abschnitt des Durchlauf-Backofens, aus dem Details einer Backgut-Fördereinrichtung und einer Heizvorrichtung ein- schließlich einer Wärmetauscher-Heizeinrichtung und einer Heizeinrichtung zum direkten Beheizen eines Durchlauf-Backraums über ein Heizgas ersichtlich sind;
- Fig. 3: ähnlich abstrakt wie in Fig. 2 einen Längs-Horizontalschnitt durch einen Abschnitt des Durchlauf-Backofens nach Fig. 1, wobei Details zur Führung eines Heizmediums in der Wärmetauscher-Heizeinrichtung ersichtlich sind;
- Fig. 4: in einer zu Fig. 3 ähnlichen Darstellung eine Variante einer Heizvorrichtung für den Durchlauf-Backofen, aufweisend eine Wärmetauscher-Heizeinrichtung ähnlich derjenigen der Fig. 3 sowie eine Konvektions-Heizeinrichtung zum direkten Beheizen des Durchlauf-Backraums über ein Heizgas;
- Fig. 5: schematisch eine Heizmedium-Führung durch eine Variante einer Wärmetauscher-Heizeinrichtung für den Durchlauf-Backofen mit einer als Rohrpaket ausgeführten Radiator-Rohranordnung, die derart ausgeführt ist, dass das Heizmedium in jeweils zwei benachbarten Wärmetauscher-Rohren in einander entgegengesetzter Strömungsrichtung fließt,
- Fig. 6: eine alternative Ausführung einer Radiator-Rohranordnung einer Wärmetauscher-Heizeinrichtung für den Durchlauf-Backofen, wobei ein Verlauf der Radiator-Rohranordnung schnecken- beziehungsweise mäanderförmig ist; und
- Fig. 7: in einer zu Fig. 6 ähnlichen Darstellung eine weitere schnecken- beziehungsweise mäanderförmige Ausführung einer Radiator-Rohranordnung einer Wärmetauscher-Heizeinrichtung für den Durchlauf-Backofen.

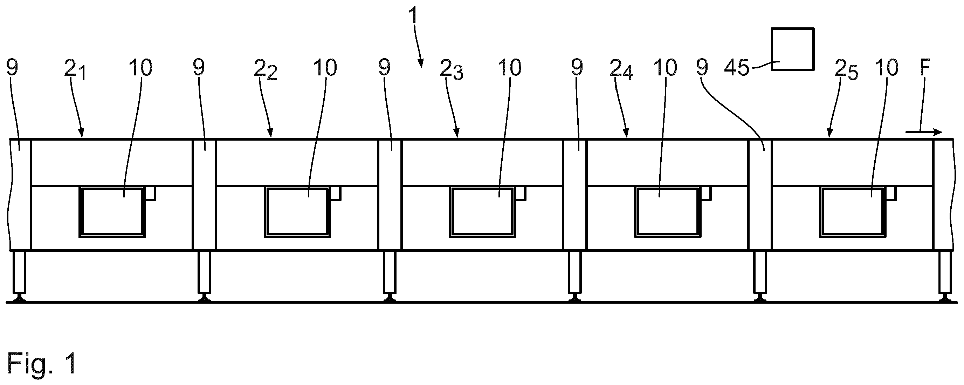

Fig. 1 zeigt eine Gesamt-Seitenansicht eines als Tunnelofen ausgeführten Durchlauf-Backofens 1, mit dem z.B. Dauerbackgebäck in Form von Weichkeksen, Hartkeksen oder Laugengebäck produziert werden können. Auch anderes Backgut, z.B. Toastbrot, kann im Backofen verarbeitet werden. Mit dem Backofen 1 ist auch ein Rösten und als Spezialanwendung auch ein Trocknen oder Sterilisieren möglich. Der Backofen 1 ist in der dargestellten Ausführung unterbrochen dargestellt und hat eine Mehrzahl von Ofenmodulen 2 mit Backräumen, die zusammen einen Durchlauf-Backraum 3 zwischen jeweils einem in Backgut-Förderrichtung F führenden Anfangs-Ofenmodul 2₁ und jeweils einem in Backgut-Förderrichtung letzten Abschluss-Ofenmodul 2_{N} (i = 1, ..., N, N: Anzahl der Ofenmodule) bilden. In der Fig. 1 sind insgesamt fünf Ofenmodule 2₁ bis 2₅ dargestellt. Die Ofenmodule sind beim Durchlauf-Backofen 1 also einstöckig angeordnet. Die Anzahl N der Ofenmodule 2ᵢ kann in der Praxis beispielsweise zwischen 5 und 20 variieren.

Die Ofenmodule 2ᵢ haben jeweils den gleichen Grundaufbau, insbesondere was eine Tragrahmengestaltung sowie Aufnahmen für An- und Einbauteile angeht. Insoweit haben die Ofenmodule 2₅ die gleichen Abmessungen, haben also, was Höhe, Breite und Tiefe angeht, jeweils grundsätzlich die gleichen Bauraumerfordernisse.

Eine typische Länge eines der Ofenmodule 2 in der Backgut-Förderrichtung F ist mehr als 2 m und kleiner als 10 m und kann beispielsweise im Bereich zwischen 3 m und 6 m liegen. Die Länge eines Ofenmoduls 2ᵢ kann beispielsweise 4,5 m, 6 m oder 7,5 m betragen.

Eine Arbeitsbreite des Durchlauf-Backraums 3 kann größer sein als 1 m und kann bis zu 4 m betragen.

Der Durchlauf-Backofen 3 kann eine Gesamtlänge längs der Backgut-Förderrichtung F im Bereich zwischen 8 m und 80 m, insbesondere im Bereich zwischen 12 m und 60 m haben.

Eine lichte Höhe des Durchlauf-Backraums 3 kann größer sein als 200 mm und kann kleiner sein als 300 mm.

Die Ofenmodule 2ᵢ liegen zunächst als separate Module vor und werden beim Zusammenbau des Backofens 1 miteinander verbunden.

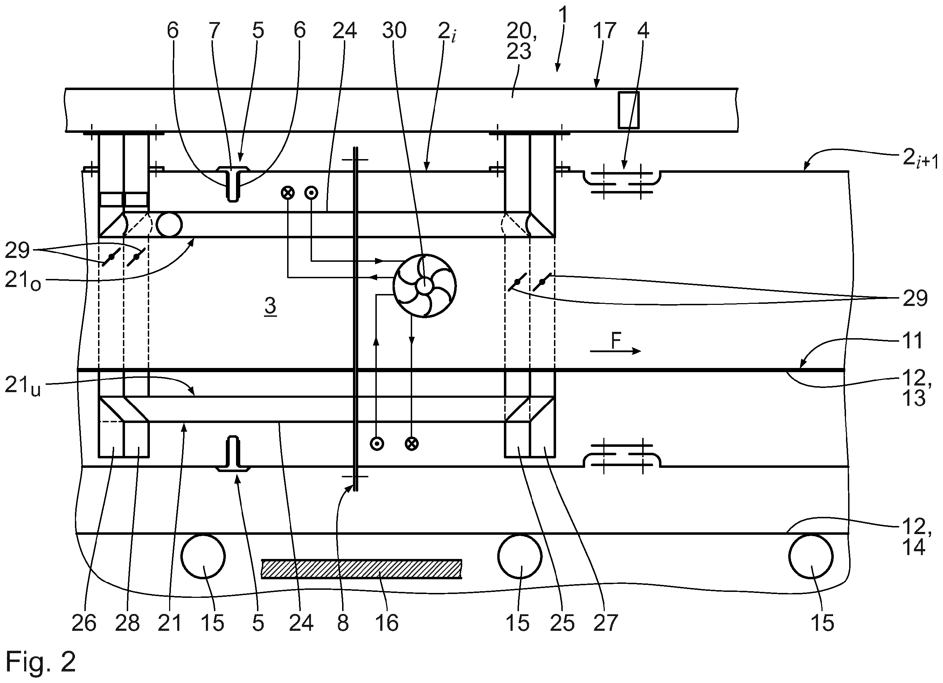

Fig. 2 zeigt eine mögliche Verbindungstechnik zweier Ofenmodule 2ᵢ, 2ᵢ₊₁ über einen Schiebestoß 4, der bekannt ist aus der EP 1 729 584 B. Der Schiebstoß 4 sorgt für einen Ausgleich einer Materialausdehnung von Modul-Gehäuseelementen abhängig von deren Temperatur. Zum weiteren Temperaturausdehnungs-Ausgleich ist in der Fig. 2 eine um das Ofenmodul 2ᵢ umlaufende Schweißverbindung 5 mit umlaufend umgekanteten Gehäuse-Kantenbereichen 6 und einem eingelegten T-Profil 7 gezeigt, welches mit den umgekanteten Gehäuse-Kantenbereichen 6 umlaufend um das Ofenmodul 2ᵢ verschweißt ist.

Gehäuseelemente der jeweiligen Ofenmodule 2_{N} können zudem miteinander über Schraubstoß-Verbindungen nach Art von Flanschen miteinander verbunden sein.

Die Ofenmodule 2ᵢ werden von einem Maschinenboden getragen.

Vor einem in der Backgut-Förderrichtung jeweils führenden Anfangs-Backofenmodul 2₁ ist in der Förderrichtung ein Beschickungsmodul 9 für das Backgut angeordnet, welches mit dem Durchlauf-Backraum 3 kommuniziert. Hinter einem in der Backgut-Förderrichtung letzten Abschluss-Ofenmodul 2_{N} ist ein in der Zeichnung nicht dargestelltes Ausgabe- beziehungsweise Abschluss-Modul des Durchlauf-Backofens 1 zum Übernehmen des gebackenen Backguts aus dem Durchlauf-Backraum 3 und zum Ausgeben von diesem angeordnet, welches wiederum mit dem Durchlauf-Backraum 3 kommuniziert.

Zu backendes Backgut tritt über das Beschickungsmodul 9 in den Durchlauf-Backraum 3, also in das führende Anfangs-Ofenmodul 2₁ ein, durchläuft den Durchlauf-Backraum 3 längs der Backgut-Förderrichtung F und tritt über das Ausgabemodul nach Durchlaufen des letzten Abschluss-Ofenmoduls 2ᵢ aus dem Durchlauf-Backraum 3 fertig gebacken wieder aus.

In der Seitenansicht des Durchlauf-Backofens nach Fig. 1 sind bei den Ofenmodulen 2ᵢ zudem vorgesehen Reinigungs- und Inspektionsöffnungen 10. Zudem kann in den Ofenmodulen 2ᵢ seitlich eine zusätzliche Schwadenöffnung vorgesehen sein, über die ein Be-/Entschwaden des jeweiligen Teil-Backraums des zugehörigen Ofenmoduls 2ᵢ möglich ist.

Zur Förderung des Backguts in der Backgut-Förderrichtung F dient eine Backgut-Fördereinrichtung 11 mit einem endlos umlaufenden Backband 12. Ein Obertrum 13 des Backbandes 12 verläuft durch den Durchlauf-Backraum 3. Ein Untertrum 14 des Backbandes 12 durchläuft unterhalb eines Backraumgehäuses der Ofenmodule 2ᵢ.

Bei dem Backband kann es sich um ein Netz aus Metall handeln. Zu diesem Netz können quer zur Förderrichtung F verlaufende Rohrelemente gehören. Auch ein nichtmetallisches Material ist für das Backband 12 möglich. Das Backband 12 kann mittels einer üblichen Spanneinrichtung, die eine verlagerbare Spannrolle aufweist, gespannt werden. Das Untertrum 14 kann über Rollen 15, wie in der Figur 2 dargestellt, und/oder über Gleitelemente unterstützt werden. Unterhalb des Untertrums 14 können vorgefertigte Paneele eingesetzt sein, die zur Reinigung des Rücklaufes aus einem Gehäuse des Durchlauf-Backofens 1 entnehmbar gestaltet sind. Unterhalb des Untertrums 14 sind die Ofenmodule 2ᵢ mittels Wärmeisolationsplatten 16 wärmeisoliert. Zur thermischen Isolation kann auch gestopfte Mineralwolle zum Einsatz kommen.

Die Backgut-Fördereinrichtung 11 dient zum kontinuierlichen Fördern des Backguts zwischen dem Anfangs-Ofenmodul 2₁ und dem Abschluss-Ofenmodul 2_{N} des Durchlauf-Backofens 1.

Das Backband 12 ist für eine Bandbelastung im Bereich zwischen 10 kg pro Quadratmeter und 100 kg pro Quadratmeter, besonders im Bereich zwischen 30 kg pro Quadratmeter und 80 kg pro Quadratmeter ausgelegt.

Das Backband 12 kann als Stahlband, als Gurt auf Rohren oder auch als Netzband ausgelegt sein.

Ein umlaufender Antrieb des Backbandes 12 zum Bewegen des Obertrums 13 in der Backgut-Förderrichtung 11 kann über einen nicht dargestellten Antrieb der Backgut-Fördereinrichtung 11 erfolgen, der über Formschluss mit dem Backband 12 zusammenwirkt. Hierbei kann ein Endlos-Zugmittel, beispielsweise eine Kette, zum Einsatz kommen.

Die Bandspannung kann hydraulisch betätigt sein. Eine Positionierung/Geschwindigkeitsregelung des Backbandes kann mithilfe einer optischen oder kapazitiven Sensorik insbesondere berührungslos erfolgen. Hierzu kann ein nicht dargestellter Positionssensor einen seitlichen Kantenbereich des Backbandes U-förmig umgreifen.

Der Durchlauf-Backofen 1 kann eine Vorheizung für das Backband 12 aufweisen.

Der Durchlauf-Backofen 1 hat eine Wärmetauscher-Heizeinrichtung 17, zu der nachfolgend Ausführungsvarianten anhand der Fig. 2 bis 6 erläutert werden. Die Wärmetauscher-Heizeinrichtung 17 dient zum indirekten Beheizen des Durchlauf-Backraums 3 über ein fließfähiges Heizmedium. Bei dem Heizmedium kann es sich um Heizgas handeln.

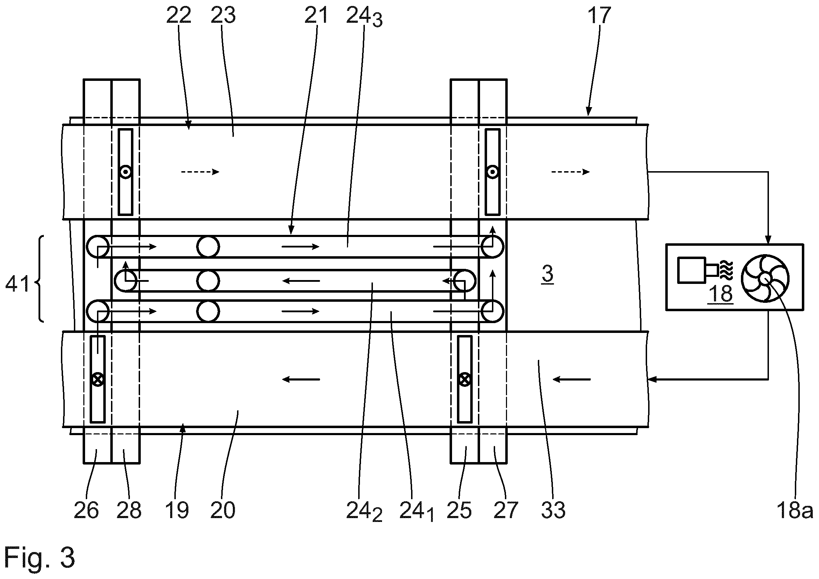

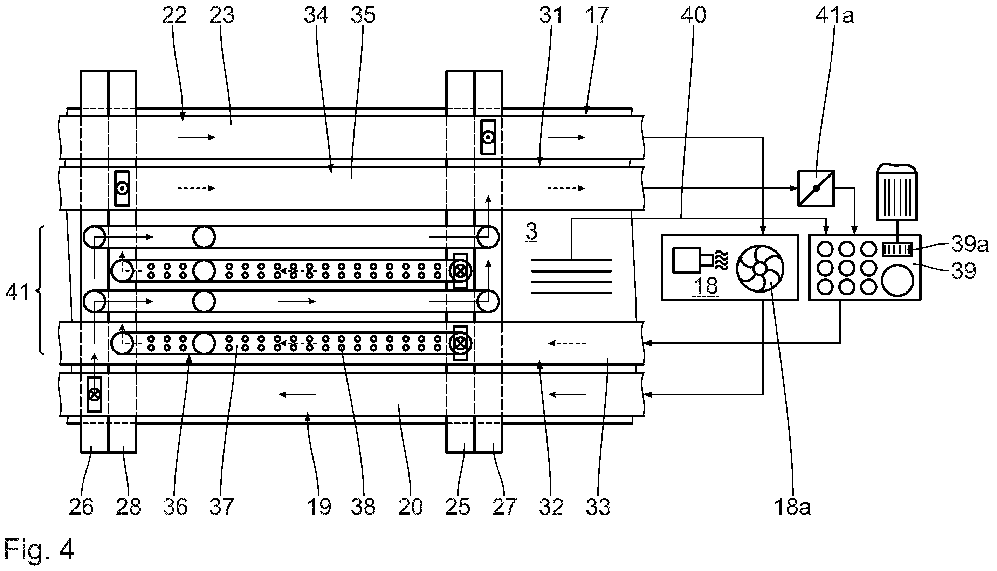

Hauptkomponenten der Wärmetausch-Heizeinrichtung 17 sind eine Heizeinheit 18 für das Heizmedium, die bei den Ausführungen nach den Fig. 3 und 4 als Heißgasbrenner ausgeführt ist, eine Heizmedium-Vorlauf-Rohranordnung 19 mit einer Vorlauf-Hauptleitung 20, mindestens eine Radiator-Rohranordnung 21 zum Strahlungs-Beheizen des Durchlauf-Backraums 3 und eine Heizmedium-Rücklauf-Rohranordnung 22 mit einer Rücklauf-Hauptleitung 23 für das Heizmedium. Die Heizeinheit 18, die Heizmedium-Vorlauf-Rohranordnung 19, die Radiator-Rohranordnung 21 und die Heizmedium-Rücklauf-Rohranordnung 22 stellen einen geschlossenen Heizgas-Kreislauf dar.

Die Wärmetauscher-Heizeinrichtung 17 des Durchlauf-Backofens kann so ausgeführt sein, dass für jedes Ofenmodul 2ᵢ genau eine derartige Wärmetauscher-Heizeinrichtung 17 vorgesehen ist. Die Anzahl der Wärmetauscher-Heizeinrichtungen 17 kann sich von der Anzahl der Ofenmodule 2ᵢ auch unterscheiden. So ist es möglich, beispielsweise bestimmte Ofenmodule 2ᵢ ohne Wärmetauscher-Heizeinrichtung 17 auszuführen. Es ist auch möglich, eine Wärmetauscher-Heizeinrichtung 17 für mehrere benachbarte Ofenmodule 2ᵢ, 2ᵢ₊₁,... auszugestalten. Schließlich ist es möglich, ein Ofenmodul 2ᵢ mit mehreren Wärmetauscher-Heizeinrichtungen 17 auszurüsten.

Eine Heizzonenregelung, also ein Backraum-Temperaturverlauf längs der Backgut-Förderrichtung F kann über eine jeweilige Temperaturregelung der verschiedenen Wärmetauscher-Heizeinrichtungen 17 durch geregeltes Ansteuern der jeweiligen Heizeinheiten 18 erfolgen. Jede Regelzone längs der Backgut-Förderrichtung F im Durchlauf-Backraum 3 verfügt über eine eigene, unabhängig ansteuerbare Heizeinheit 18.

Die Radiator-Rohranordnungen 21 der Wärmetauscher-Heizeinrichtung 17 können als Oberhitze-/Unterhitze-Anordnungen in Bezug auf den Durchlauf-Backraum 3 ausgeführt sein. Fig. 2 zeigt eine Variante der Wärmetauscher-Heizeinrichtung 17, bei der im Ofenmodul 2ᵢ sowohl eine Oberhitze-Anordnung 21ₒ als auch eine Unterhitze-Anordnung 21ᵤ der Radiator-Rohranordnung 21 vorhanden ist.

Die jeweilige Radiator-Rohranordnung 21 hat eine Mehrzahl nebeneinander verlaufender Wärmetauscher-Rohre 24ᵢ zur indirekten Wärmeabgabe an den Backraum 3, die jeweils das Heizmedium zwischen der Heizmedium-Vorlauf-Rohranordnung 19 und der Heizmedium-Rücklauf-Rohranordnung 22 führen. Die Wärmetauscher-Rohre 24ᵢ der jeweiligen Radiator-Rohranordnung 21 sind als Rohrpaket mit Rohren 24ᵢ im Wesentlichen gleicher Länge ausgeführt.

Die Radiator-Rohranordnung 21 aus den nebeneinander verlaufenden Wärmetauscher-Rohren 24ᵢ ist in einer horizontal verlaufenden Ebene angeordnet, die senkrecht zur Zeichenebene der Fig. 2 liegt und parallel zu den Zeichenebenen der Fig. 3 bis 5.

Bei der Heizgasführung der Wärmetauscher-Heizeinrichtung 17 nach Fig. 3 verläuft die Vorlauf-Hauptleitung 20 einerseits und die Rücklauf-Hauptleitung 23 andererseits parallel zu einer Längserstreckung der Wärmetauscher-Rohre 24 der jeweiligen Radiator-Rohranordnung 21. Diese Verlaufsrichtung ist zudem parallel zur Förderrichtung F. Alternativ ist es möglich, die Verlaufsrichtung der Hauptleitungen 20, 23 beziehungsweise die Verlaufsrichtung der Wärmetauscher-Rohre 24 quer zur Backgut-Förderrichtung F auszuführen.

Von der Vorlauf-Hauptleitung 20 verlaufen Vorlauf-Stichleitungen 25, 26, die jeweils als Ringkanäle ausgeführt sind, zu den Wärmetauscher-Rohren 24. Die Vorlauf-Stichleitungen 25, 26 verlaufen jeweils in einer Ebene, auf der die Längserstreckung der Wärmetauscher-Rohre 24 senkrecht steht, verlaufen also quer zur Längserstreckung der Wärmetauscher-Rohre 24.

Die Vorlauf-Stichleitungen 25, 26 stehen mit räumlich entgegengesetzten Enden jeweils alternierend aufeinanderfolgender Wärmetauscher-Rohre 24ᵢ, 24ᵢ₊₁ der Radiator-Rohranordnung 21 in Fluidverbindung. Bei der Ausführung nach Fig. 3 steht die Vorlauf-Stichleitung 25 mit dem mittleren Wärmetauscher-Rohr 24₂ am in der Fig. 3 rechten Ende dieses Wärmetauscher-Rohrs 24₂ in Fluidverbindung. Die andere Vorlauf-Stichleitung 26 steht mit den beiden anderen Wärmetauscher-Rohren 24₁ und 24₃ der Radiator-Rohranordnung 21 in Fluidverbindung. Dies ergibt eine Führung des Heizmediums durch die Radiator-Rohranordnung 21 derart, dass das Heizmedium in zwei benachbarten Wärmetauscher-Rohren 24ᵢ, 24ᵢ₊₁ in einander entgegengesetzter Strömungsrichtung fließt. Bei der Ausführung nach Fig. 3 verläuft das Heizmedium in den Wärmetauscher-Rohren 24₁, 24₃ von links nach rechts und im zwischenliegenden Wärmetauscher-Rohr 24₂ von rechts nach links. Bei der Ausführung nach Fig. 3 ist die Radiator-Rohranordnung 21 so ausgeführt, dass das Heizmedium also durch alle Wärmetauscher-Rohre 24ᵢ in jeweils alternierender Richtung fließt. Eine resultierende "Gegenstrom"-Anordnung ist so, dass ein Weg des Heizmediums durch die Wärmetauscher-Rohre 24₁ zwischen der Heizmedium-Vorlauf-Rohranordnung 19 und der Heizmedium-Rücklauf-Rohranordnung 22 nicht länger ist, als wenn das Heizmedium durch alle Wärmetauscher-Rohre 24ᵢ im Gleichstrom, also jeweils in der gleichen Richtung, strömen würde.

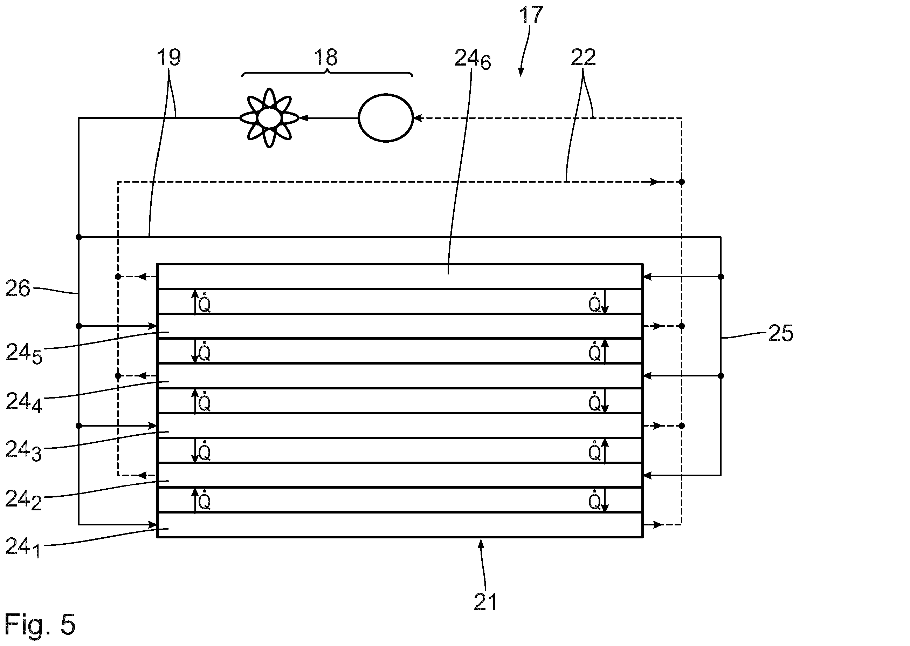

Schematisch ist eine derartige Gestaltung der Rohranordnungen 19, 21 und 22, die zu einem entsprechend alternierenden Heizmedium-Fluss durch die Wärmetauscher-Rohre 24ᵢ führt, in der Fig. 5 gezeigt. Komponenten und Funktionen, die denjenigen entsprechen, die vorstehend unter Bezugnahme auf die Fig. 1 bis 4 und insbesondere unter Bezugnahme auf die Fig. 2 und 3 bereits erläutert wurden, tragen die gleichen Bezugsziffern und werden nicht nochmals im Einzelnen diskutiert.

In der Fig. 5 sind die Wärmetauscher-Rohre 24₁ bis 24₆, was ihren Index angeht, von unten nach oben durchnummeriert. Das Heizmedium fließt über die Heizeinheit 18 und die Vorlauf-Rohranordnung 19 in die Vorlauf-Stichleitungen 25, 26, die wiederum mit räumlich entgegengesetzten Enden der Wärmetauscher-Rohre der Radiator-Rohranordnung 21 in Fluidverbindung stehen. Längs der Strömungsrichtung durch die Wärmetauscher-Rohre 24ᵢ ergibt sich ein Temperaturgradient des Heizmediums, welches beim Eintritt in das jeweilige Wärmetauscher-Rohr 24 am heißesten ist und aufgrund der Wärmeabgabe in den Durchlauf-Backraum 3 sich im weiteren Strömungsverlauf durch das Wärmetauscher-Rohr 24 abkühlt.

Es ergibt sich der alternierende Heizmedium-Fluss, bei dem die Wärmetauscher-Rohre 24₁, 24₃ und 24₅ in der Fig. 5 von links nach rechts und die Wärmetauscher-Rohre 24₂, 24₄ und 24₆ in der Fig. 5 von rechts nach links mit dem Heizmedium durchströmt werden. Aufgrund dieser "Gegenstrom"-Anordnung ergibt sich eine Vergleichmäßigung der Wärmeabstrahlung über die gesamte Fläche der Radiator-Rohranordnung 21 hin zum Backraum, also in der Richtung senkrecht zur Zeichenebene der Fig. 5. Ein während dieser Vergleichmäßigung fließender Wärmetransport zwischen heißeren Enden der Wärmetauscher-Rohre 24ᵢ und zwischenliegenden weniger heißen Enden der Wärmetauscher-Rohre 24ᵢ₋₁, 24ᵢ₊₁ ist in der Fig. 5 durch den Wärmefluss δQ/δt andeutende Pfeile verdeutlicht.

Nachfolgend wird zunächst unter Bezugnahme auf die Fig. 3 der Verlauf des Heizmediums durch die Heizmedium-Rücklauf-Rohranordnung 22 beschrieben. Die Rücklauf-Hauptleitung 23 steht über Rücklauf-Stichleitungen 27, 28, die wiederum vergleichbar zu den Vorlauf-Stichleitungen 25, 26, als Ringkanäle ausgeführt sind, mit räumlich entgegengesetzten Enden der Wärmetauscher-Rohre 24 der jeweiligen Radiator-Rohranordnung 21 in Fluidverbindung. Das über die Vorlauf-Stichleitung 25 in das Wärmetauscher-Rohr 24₂ von rechts her einfließende Heizmedium fließt aus dem Wärmetauscher-Rohr 24₂ über die Rücklauf-Stichleitung 28 zurück in die Rücklauf-Hauptleitung 23. Das von links her über die Vorlauf-Stichleitung 26 in die Wärmetauscher-Rohre 24₁, 24₃ nach rechts strömende Heizmedium fließt über die Rücklauf-Stichleitung 27 wiederum in die Rücklauf-Hauptleitung 23 ab.

Eine relative Oberhitze-/Unterhitze-Heizleistung kann über Drosselorgane, beispielsweise in Form von Drosselklappen 29, in den Stichleitungen 25 bis 28 vorgegeben werden, die in der Fig. 2 dargestellt sind.

Die über die Wärmetauscher-Heizeinrichtung 17 geheizte Luft im Backraum kann über einen Umwälzventilator 30 umgewälzt werden.

Eine Heizung des Durchlauf-Backraums 3 kann weiterhin über eine Konvektions-Heizeinrichtung 31 zum direkten Beheizen des Durchlauf-Backraums 3 über ein Heizgas erfolgen. Eine derartige Konvektions-Heizeinrichtung 31 wird nachfolgend anhand der Fig. 4 erläutert, die eine solche Konvektions-Heizeinrichtung 31 zusätzlich zur bereits erläuterten Wärmetauscher-Heizeinrichtung 17 aufweist.

Die Konvektions-Heizeinrichtung 31 hat eine Heizgas-Vorlauf-Rohranordnung 32 mit einer Heizgas-Vorlauf-Hauptleitung 33, die parallel zur Heizmedium-Vorlauf-Hauptleitung 20 der Wärmetauscher-Heizeinrichtung 17 verläuft. Weiterhin hat die Konvektions-Heizeinrichtung 31 eine Heizgas-Rücklauf-Rohranordnung 34 mit einer Heizgas-Rücklauf-Hauptleitung 35, die wiederum parallel zur Heizmedium-Rücklauf-Hauptleitung 23 der Konvektions-Heizeinrichtung 17 verläuft. Zwischen der Heizgas-Vorlauf-Rohranordnung 32 und der Heizgas-Rücklauf-Rohranordnung 34 liegt im Heizgas-Strömungsweg eine Konvektions-Heizgas-Rohranordnung 36 mit einer Mehrzahl nebeneinander verlaufender Konvektions-Heizgas-Rohre 37.

Die Konvektions-Heizgas-Rohre 37 weisen mantelseitige Durchtrittsöffnungen 38 in Form von Perforationslöchern auf, über die das Heizgas vom Inneren der Konvektions-Heizgas-Rohre 37 in den Backraum 3 geführt werden kann.

Eine zumindest teilweise Kreislaufführung des Heizgases der Konvektions-Heizeinrichtung 31 verläuft über eine Heizgas-Heizeinheit 39 in Form beispielsweise eines Kanalbrenners oder eines sonstigen Brenners. Von dort wird das Heizgas über eine entsprechende Zuführleitung in die Heizgas-Vorlauf-Hauptleitung 33 geführt. Letztere steht über die Vorlauf-Stichleitung 25 mit den in Fig. 4 rechten Enden der Heizgas-Rohre 37 in Fluidverbindung. Von dort strömt das Heizgas in die Heizgas-Rohre 37 und jedenfalls ein Teil des Heizgases strömt durch die Durchtrittsöffnungen 38 in den Backraum 3. Nicht über die Durchtrittsöffnungen 38 aus den Heizgas-Rohren 37 abgeführtes Heizgas verlässt die Heizgas-Rohre 37 über die Rücklauf-Stichleitung 28, von wo das Heizgas in die Heizgas-Rücklauf-Hauptleitung 35 geführt wird.

Die Heizeinheiten 18 und 39 weisen jeweils mindestens einen Umwälzventilator 18a, 39a für das Heizmedium beziehungsweise das Heizgas auf.

Von der Heizgas-Rücklauf-Hauptleitung 35 strömt das Heizgas über eine entsprechende Rücklaufleitung zurück zur Heizgas-Heizeinheit 39, sodass der Heizgas-Kreislauf geschlossen ist. Zusätzlich saugt die Heizeinheit 39 das Heizgas aus dem Backraum 3 direkt an, was in der Fig. 4 über einen Strömungsweg 40 verdeutlicht ist.

Die Wärmetauscher-Rohre 24 der Wärmetauscher-Heizeinrichtung 17 einerseits und die Heizgas-Rohre 37 der Konvektions-Heizeinrichtung 31 andererseits sind einander abwechselnd in einem Rohrpaket 41 im Durchlauf-Backofen 1, insbesondere im jeweiligen Ofenmodul 2ᵢ untergebracht. Die Rohre eines solchen Rohrpakets 41 sind dann abwechselnd mit Durchtrittsöffnungen 38 versehen und mantelseitig geschlossen ausgeführt. Die Direktheizung über das Heizgas mittels der Konvektions-Heizeinrichtung 31 kann unter Nutzung der Konvektion und/oder über mittels eines Umwälzventilators, beispielsweise des Ventilators 39a, getriebener Gasströmung erfolgen.

Im Bereich des Heizgas-Rücklaufs zwischen der Heizlauf-Rücklauf-Hauptleitung 35 und der Heizgas-Heizeinheit 39 kann ein Drosselorgan, beispielsweise eine Drosselklappe 41a, zur Regelung einer umgewälzten Heizgasmenge angeordnet sein. Alternativ oder zusätzlich kann eine umgewälzte Heizgasmenge auch über den Umwälzventilator 39a gesteuert werden.

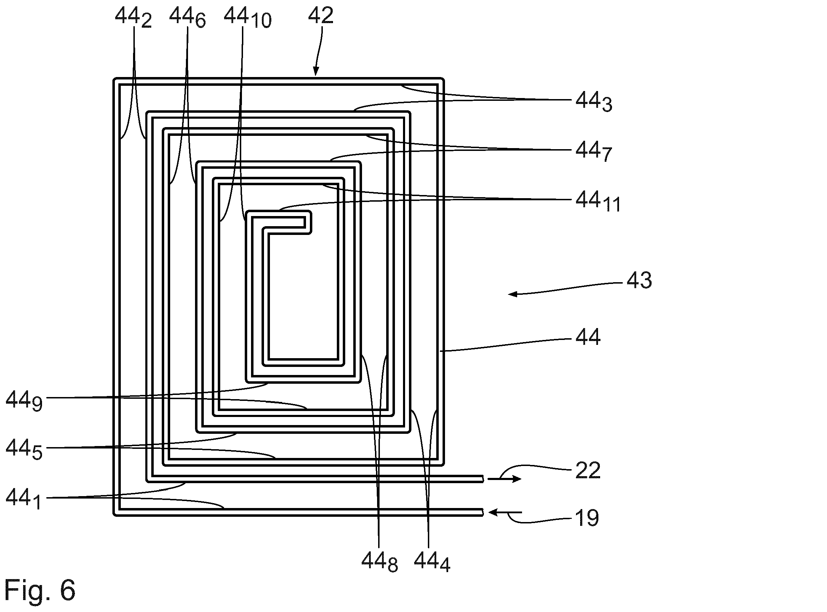

Anhand der Fig. 6 wird nachfolgend eine weitere Ausführung einer Radiator-Rohranordnung 42 einer weiteren Ausführung einer Wärmetauscher-Heizeinrichtung 43 beschrieben. Komponenten und Funktionen, die denjenigen entsprechen, die vorstehend unter Bezugnahme auf die Fig. 1 bis 5 bereits erläutert wurden, tragen die gleichen Bezugsziffern und werden nicht nochmals im Einzelnen diskutiert.

Die Wärmetauscher-Heizeinrichtung 43 hat einen Heizmedium-Vorlauf-Rohrabschnitt nach Art der Heizmedium-Vorlauf- Rohranordnung 19 und eine Heizmedium-Rücklauf-Rohranordnung nach Art der Heizmedium-Rücklauf-Rohranordnung 22. Die zwischenliegende Radiator-Rohranordnung 42 hat einen Wärmetauscher-Rohrabschnitt 44 zur Führung des Heizmediums zwischen dem Heizmedium-Vorlauf-Rohrabschnitt 19 und dem Heizmedium-Rücklauf-Rohrabschnitt 22 und zur indirekten Wärmeabgabe an den Backraum 3 des Durchlauf-Backofens 1. Ein Verlauf der Radiator-Rohranordnung 42 ist schnecken- beziehungsweise mäanderförmig derart, dass das Heizmedium in zwei benachbarten Wärmetauscher-Rohrabschnitten 44ᵢ (i =1 bis 11) in einander entgegengesetzter Strömungsrichtung fließt. Dies ist in der Ausführung nach Fig. 6 beispielhaft anhand der Wärmetauscher-Rohrabschnitte 44₁ bis 44₁₁ verdeutlicht. Die Anzahl derartiger benachbarter Wärmetauscher-Rohrabschnitte 44ᵢ kann im Bereich zwischen 2 und 30 liegen, kann größer sein als 5, kann größer sein als 10, kann kleiner sein als 30, kann kleiner sein als 25, kann kleiner sein als 20 und kann kleiner sein als 15.

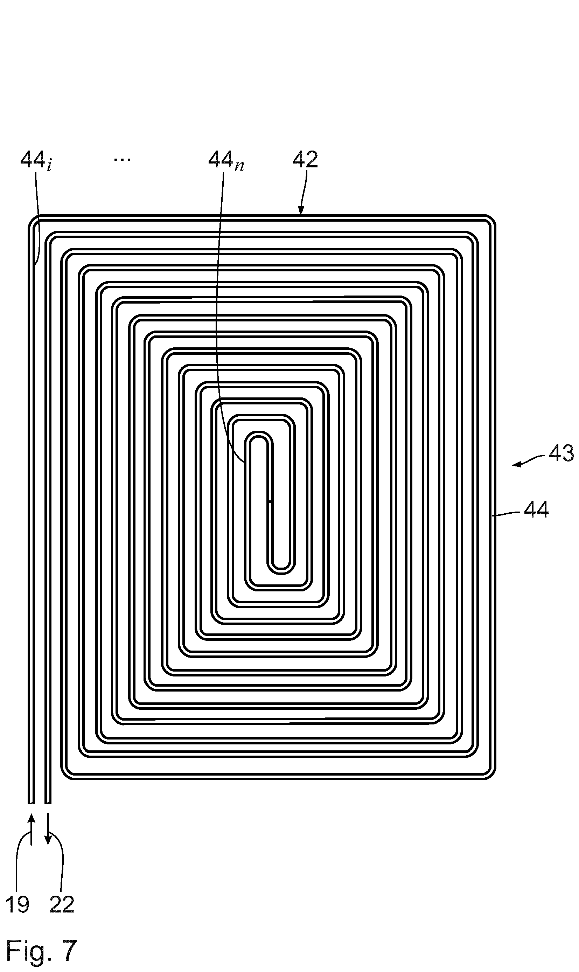

Fig. 7 zeigt eine weitere Variante einer schnecken- beziehungsweise mäanderförmigen Radiator-Rohranordnung 42 einer Wärmetauscher-Heizeinrichtung 43, die anstelle derjenigen zum Einsatz kommen kann, die vorstehend unter Bezugnahme auf die Fig. 6 erläutert wurde. Komponenten und Funktionen, die denjenigen entsprechen, die vorstehend bereits beschrieben wurden, tragen die gleichen Bezugsziffern und werden nicht nochmals im Einzelnen diskutiert.

Die Radiator-Rohranordnung 42 nach Fig. 7 hat im Vergleich zu denjenigen nach Fig. 6 eine sehr viel größere Anzahl benachbarter Wärmetauscher-Rohrabschnitte 44ᵢ, in denen das Heizmedium ineinander entgegengesetzter Strömungsrichtung fließt. Die Wärmetauscher-Rohrabschnitte 44ᵢ sind bei der Ausführung nach Fig. 7 zueinander in etwa gleich beabstandet. Die Anzahl der benachbarten Wärmetauscher-Rohrabschnitte 44ᵢ ist bei der Radiator-Rohranordnung 42 nach Fig. 7 größer als 25.

Die Heizeinheiten 18, 39 einschließlich deren Umwälzventilatoren sowie die beschriebenen Klappen sind mit einer zentralen Steuer/Regeleinrichtung 45 des Durchlauf-Backofens 1 verbunden, die in der Fig. 1 schematisch dargestellt ist. Diese Steuer/Regeleinrichtung 45 hat in üblicher Weise eine Anzeige sowie Betriebselemente zur Eingabe von Funktionsparametern sowie zur Auswahl von Betriebsprogrammen des Durchlaufs-Backofens. Über die Steuer/Regeleinrichtung 45 kann insbesondere kann insbesondere ein Temperaturzonenverlauf für das Backgut längs der Backgut-Förderrichtung F im Backraum 3 vorgegeben werden. Die verschiedenen Heizeinrichtungen 17, 31, 43 können unabhängig voneinander über die Steuer/Regeleinrichtung gesteuert beziehungsweise geregelt beziehungsweise betrieben werden.

Zum geregelten Betrieb hat der Durchlauf-Backofen Sensoren zur Messung insbesondere der Temperatur des Durchlauf-Backofens längs der Backofen-Förderrichtung F. Weiterhin können Sensoren zur Messung einer umgewälzten Menge des Heizmediums beziehungsweise des Heizgases vorhanden sein. Weitere Sensoren können Temperaturen an ausgewählten Rohrabschnitten der vorstehend erläuterten Rohranordnung messen.

Eine Temperaturregelzone längs der Backgut-Förderrichtung F kann eine Länge haben, die maximal 18 m beträgt und die auch eine geringere Ausdehnung haben kann, beispielsweise 15 m, 12 m, 10 m, 8 m, 6 m oder 3 m.

Der Durchlauf-Backofen 1 kann mit einem Schwadensystem ausgeführt sein.

Der Durchlauf-Backofen 1 kann eine automatische Dampfmengenregelung aufweisen. Zur Entschwadung kann der Durchlauf-Backofen 1 einen regelbaren Schwadenventilator aufweisen.

Die vorstehend beschriebenen Radiator-Rohranordnungen, insbesondere die Rohrpakete, können als separat vorgefertigte und mit den weiteren Komponenten des Durchlauf-Backofens 1 beispielsweise über Schraubverbindungen und/oder über geschweißte Verbindungen verbindbare Baugruppen ausgeführt sein.

Ein Querschnitt der für die vorstehend beschriebenen Rohranordnungen verwendeten Rohre kann rund sein, kann aber abschnittsweise oder insgesamt auch von einer runden Form abweichen. Es kann beispielsweise ein trapezförmiger Rohrquerschnitt zum Einsatz kommen.

## Patentansprüche

1. Durchlauf-Backofen (1) für den kontinuierlichen Backbetrieb
- mit einem Durchlauf-Backraum (3),
- mit einer Mehrzahl von Ofenmodulen (2ᵢ) mit Modul-Backraumabschnitten, die zusammen den Durchlauf-Backraum (3) zwischen einem in Backgut-Förderrichtung (F) führenden Anfangs-Ofenmodul (2₁) und einem in der Backgut-Förderrichtung (F) letzten Abschluss-Ofenmodul (2_{N}) bilden,
- mit einer Backgut-Fördereinrichtung (11) zum kontinuierlichen Fördern von Backgut zwischen dem Anfangs-Ofenmodul (2₁) und dem Abschluss-Ofenmodul (2_{N}) in der Backgut-Förderrichtung (F),
- mit einer Wärmetauscher-Heizeinrichtung (17) zum indirekten Beheizen des Durchlauf-Backraums (3) über ein fließfähiges Heizmedium,
- wobei die Wärmetauscher-Heizeinrichtung (17) aufweist:
-- eine Heizmedium-Vorlauf-Rohranordnung (19),
-- eine Heizmedium-Rücklauf-Rohranordnung (22), und
-- mindestens eine zwischenliegende Radiator-Rohranordnung (21) mit einer Mehrzahl nebeneinander verlaufender Wärmetauscher-Rohre (24) zur indirekten Wärmeabgabe an den Backraum (3), wobei die Wärmetauscher-Rohre (24) jeweils das Heizmedium zwischen der Heizmedium-Vorlauf-Rohranordnung (19) und der Heizmedium-Rücklauf-Rohranordnung (22) führen,
- wobei die Rohranordnungen (19, 21, 22) derart ausgebildet sind, dass das Heizmedium in zwei benachbarten Wärmetauscher-Rohren (24) in einander entgegengesetzter Strömungsrichtung fließt,
- wobei die Heizmedium-Vorlauf-Rohranordnung (19) und die Heizmedium-Rücklauf-Rohranordnung (22) jeweils zwei Stichleitungen (25, 26; 27, 28) aufweisen, die quer zur Längserstreckung der Wärmetauscher-Rohre (24) verlaufen und mit räumlich entgegengesetzten Enden der Wärmetauscher-Rohre (24) der Radiator-Rohranordnung (21) in Fluidverbindung stehen.

2. Durchlauf-Backofen nach Anspruch 1, **dadurch gekennzeichnet, dass** die Radiator-Rohranordnung (21) so ausgeführt ist, dass das Heizmedium durch alle Wärmetauscher-Rohre (24) in jeweils alternierender Richtung fließt.

3. Durchlauf- Backofen nach Anspruch 1 oder 2, **dadurch gekennzeichnet, dass** die Wärmetauscher-Rohre (24) der jeweiligen Radiator-Rohranordnung (21) als Rohrpaket mit Rohren gleicher Länge ausgeführt sind.

4. Durchlauf-Backofen nach einem der Ansprüche 1 bis 3, **dadurch gekennzeichnet, dass** die Heizmedium-Vorlauf-Rohranordnung (19) und/oder die Heizmedium-Rücklauf-Rohranordnung (22) eine Hauptleitung (20, 23) aufweisen, von der die Stichleitungen (25, 26; 27, 28) zu den Wärmetauscher-Rohren (24) verlaufen, wobei die Hauptleitung (20, 23) parallel zu einer Längserstreckung der Wärmetauscher-Rohre (24) der Radiator-Rohranordnung (21) verläuft.

5. Durchlauf-Backofen nach einem der Ansprüche 1 bis 4, **dadurch gekennzeichnet, dass** eine Oberhitze-Anordnung einerseits und eine Unterhitze-Anordnung andererseits hinsichtlich ihrer Heizleistung unabhängig voneinander ansteuerbar sind und/oder unabhängig voneinander beheizbar sind.

6. Durchlauf-Backofen nach einem der Ansprüche 1 bis 5, **dadurch gekennzeichnet, dass** die Radiator-Rohranordnungen (21) der Wärmetauscher-Heizeinrichtung (17) als Oberhitze-Anordnung (21ₒ) und/oder als Unterhitze-Anordnung (21ᵤ) ausgeführt sind.

7. Durchlauf-Backofen (1) für den kontinuierlichen Backbetrieb
- mit einem Durchlauf-Backraum (3),
- mit einer Mehrzahl von Ofenmodulen (2ᵢ) mit Modul-Backraumabschnitten, die zusammen den Durchlauf-Backraum (3) zwischen einem in Backgut-Förderrichtung (F) führenden Anfangs-Ofenmodul (2₁) und einem in der Backgut-Förderrichtung (F) letzten Abschluss-Ofenmodul (2_{N}) bilden,
- mit einer Backgut-Fördereinrichtung (11) zum kontinuierlichen Fördern von Backgut zwischen dem Anfangs-Ofenmodul (2₁) und dem Abschluss-Ofenmodul (2_{N}) in der Backgut-Förderrichtung (F),
- mit einer Wärmetauscher-Heizeinrichtung (17) zum indirekten Beheizen des Durchlauf-Backraums (3) über ein fließfähiges Heizmedium,
- wobei die Wärmetauscher-Heizeinrichtung (17) aufweist:
-- eine Heizmedium-Vorlauf-Rohranordnung mit einem Heizmedium-Vorlauf-Rohrabschnitt (19),
-- eine Heizmedium-Rücklauf-Rohranordnung mit einem Heizmedium-Rücklauf-Rohrabschnitt (22), und
-- mindestens eine zwischenliegende Radiator-Rohranordnung (42) mit einem Rohrabschnitt (44) zur Führung des Heizmediums zwischen dem Heizmedium-Vorlauf-Rohrabschnitt (19) und dem Heizmedium-Rücklauf-Rohrabschnitt (22) und zur indirekten Wärmeabgabe an den Backraum,
- wobei ein Verlauf der Radiator-Rohranordnung (42) schnecken- und/oder mäanderförmig derart ist, dass das Heizmedium in zwei benachbarten Wärmetauscher-Rohrabschnitten (44₁ bis 44₁₁) in einander entgegengesetzter Strömungsrichtung fließt.

8. Durchlauf-Backofen nach einem der Ansprüche 1 bis 7, **gekennzeichnet durch** eine Konvektion-Heizeinrichtung (31) zum direkten Beheizen des Durchlauf-Backraums (3) über ein Heizgas,
- wobei die Konvektions-Heizeinrichtung (31) aufweist:
-- eine Heizgas-Vorlauf-Rohranordnung (32),
-- eine Heizgas-Rücklauf-Rohranordnung (34), und
-- mindestens eine zwischenliegende Konvektions-Heizgas-Rohranordnung (36) mit einer Mehrzahl nebeneinanderverlaufender Konvektions-Heizgas-Rohre (37), über die jeweils das Heizgas direkt in den Backraum (3) strömt.

9. Durchlauf- Backofen nach Anspruch 8, **dadurch gekennzeichnet, dass** die Wärmetauscher-Rohre (24) der Wärmetauscher-Heizeinrichtung (17) und die Konvektionsheizgas-Rohre (37) der Konvektions-Heizeinrichtung (31) einander abwechselnd in einem Rohrpaket (41) untergebracht sind.

10. Durchlauf-Backofen nach Anspruch 8 oder 9, **dadurch gekennzeichnet, dass** die Konvektions-Heizgas-Rohre (37) eine Vielzahl von mantelseitigen Durchtrittsöffnungen (38) zur Führung des Heizgases in den Backofen (3) aufweisen.

## Claims

1. A once-through baking oven (1) for the continuous baking operation
- having a once-through baking space (3),
- having a plurality of oven modules (2ᵢ) with module baking space sections which together form the once-through baking space (3) between an initial baking oven module (2₁) leading in the baking material conveying direction (F) and a final oven module (2_{N}) in the baking material conveying direction (F),
- having a baking material conveying device (11) for continuously conveying baking material between the initial oven module (2₁) and the final oven module (2_{N}) in the baking material conveying direction (F),
- having a heat-exchange heating device (17) for indirect heating of the once-through baking space (3) via a free-flowing heating medium,
- wherein the heat-exchange heating device (17) has:
-- a heating medium outward-flow pipe arrangement (19),
-- a heating medium return-flow pipe arrangement (22), and
-- at least one intermediate radiator pipe arrangement (21) with a plurality of heat exchanger pipes (24) running side by side for indirect heat dissipation to the baking space (3), wherein the heat exchanger pipes (24) each guide the heating medium between the heating medium outward-flow pipe arrangement (19) and the heating medium return-flow pipe arrangement (22),
- wherein the pipe arrangements (19, 21, 22) are designed in such a way that the heating medium in two adjacent heat exchanger pipes (24) flows in opposite flow directions to each other,
- wherein the heating medium outward-flow pipe arrangement (19) and/or the heating medium return-flow pipe arrangement (22) each have two stubs (25, 26; 27, 28) which run transversely to the longitudinal extension of the heat exchanger pipes (24) and are in fluid communication with spatially opposite ends of the heat exchanger pipes (24) of the radiator pipe arrangement (21).

2. A once-through baking oven according to claim 1, **characterized in that** the radiator pipe arrangement (21) is designed in such a way that the heating medium flows through all heat exchanger pipes (24) in alternating directions in each case.

3. A once-through baking oven according to claim 1 or 2, **characterized in that** the heat exchanger pipes (24) of the respective radiator pipe arrangement (21) are designed as a pipe package with pipes of the same length.

4. A once-through baking oven according to any one of claims 1 to 3, **characterized in that** the heating medium outward-flow pipe arrangement (19) and/or the heating medium return-flow pipe arrangement (22) have a main line (20, 23) from which the stubs (25, 26; 27, 28) extend to the heat exchanger pipes (24), wherein the main line (20, 23) extends parallel to a longitudinal extension of the heat exchanger pipes (24) of the radiator pipe arrangement (21).

5. A once-through baking oven according to any one of claims 1 to 4, **characterized in that** a top heat arrangement on the one hand and a bottom heat arrangement on the other hand can be controlled independently of one another with regard to their heating output and/or can be heated independently of one another.

6. A once-through baking oven according to any one of claims 1 to 5, **characterized in that** the radiator pipe arrangements (21) of the heat-exchange heating device (17) are designed as a top heat arrangement (21ₒ) and/or as a bottom heat arrangement (21ᵤ).

7. A once-through baking oven (1) for the continuous baking operation
- having a once-through baking space (3),
- having a plurality of oven modules (2ᵢ) with module baking space sections which together form the once-through baking space (3) between an initial baking oven module (2₁) leading in the baking material conveying direction (F) and a final oven module (2_{N}) in the baking material conveying direction (F),
- having a baking material conveying device (11) for continuously conveying baking material between the initial baking oven module (2₁) and the final oven module (2_{N}) in the baking material conveying direction (F),
- having a heat-exchange heating device (17) for indirect heating of the once-through baking space (3) via a free-flowing heating medium,
- wherein the heat-exchange heating device (17) has:
-- a heating medium return-flow pipe section with a heating medium outward-flow pipe section (19),
-- a heating medium return-flow pipe section with a heating medium return-flow pipe section (22), and
-- at least one intermediate radiator pipe arrangement (42) with a pipe section (44) for guiding the heating medium between the heating medium outward-flow pipe section (19) and the heating medium return-flow pipe section (22) and for indirect heat dissipation to the baking space,
- wherein a course of the radiator pipe arrangement (42) is spiral and/or meander-shaped such that the heating medium in two adjacent heat exchanger pipe sections (44₁ to 44₁₁) flows in opposite flow directions to each other

8. A once-through baking oven according to any one of claims 1 to 7, **characterized by** a convection heating device (31) for direct heating of the once-through baking space (3) via a heating gas,
- wherein the convection heating device (31) has:
-- a heating gas outward-flow pipe arrangement (32),
-- a heating gas return-flow pipe arrangement (34), and
-- at least one intermediate convection heating gas pipe arrangement (36) with a plurality of convection heating gas pipes (37) running side by side, via each of which the heating gas flows directly into the baking space (3).

9. A once-through baking oven according to claim 8, **characterized in that** the heat exchanger pipes (24) of the heat-exchange heating device (17) and the convection heating gas pipes (37) of the convection heating device (31) are accommodated alternately in a pipe package (41).

10. A once-through baking oven according to claim 8 or 9, **characterized in that** the convection heating gas pipes (37) have a plurality of passage openings (38) on the shell side, for guiding the heating gas into the baking oven (3).

## Revendications

1. Four de cuisson à passage unique (1) pour le mode de cuisson continu
- comportant un espace de cuisson à passage unique (3),
- comportant une pluralité de modules de four (2ᵢ) avec des tronçons d'espace de cuisson modulaire qui forment ensemble l'espace de cuisson à passage unique (3) entre un module de four initial (2₁) situé en premier dans une direction de transport (F) du produit à cuire et un module de four final (2_{N}) situé en dernier dans la direction de transport (F) du produit à cuire,
- comportant un dispositif de transport de produit à cuire (11) pour le transport continu de produit à cuire entre le module de four initial (2₁) et le module de four terminal (2_{N}) dans la direction de transport de produit à cuire (F),
- comportant un dispositif de chauffage à échangeur de chaleur (17) pour le chauffage indirect de l'espace de cuisson à passage unique (3) par l'intermédiaire d'un milieu de chauffage coulant,
- dans lequel le dispositif de chauffage à échangeur de chaleur (17) présente :
-- un agencement de tubes aller de milieu de chauffage (19),
-- un agencement de tubes retour de milieu de chauffage (22), et
-- au moins un agencement interposé de tubes de radiateur (21) avec une pluralité de tubes d'échangeur de chaleur (24) s'étendant les uns à côté des autres pour la dissipation de chaleur indirecte vers l'espace de cuisson (3), dans lequel les tubes d'échangeur de chaleur (24) guident respectivement le milieu de chauffage (22) entre l'agencement de tubes aller de milieu de chauffage (19) et l'agencement de tubes retour de milieu de chauffage (22),
- dans lequel les agencements de tubes (19, 21, 22) sont conçus de telle sorte que le milieu de chauffage s'écoule dans deux tubes d'échangeur de chaleur (24) adjacents dans des directions d'écoulement opposées,
- dans lequel l'agencement de tubes aller de milieu de chauffage (19) et l'agencement de tubes retour de milieu de chauffage (22) comportent respectivement deux lignes de dérivation (25, 26 ; 27, 28) qui s'étendent transversalement à l'extension longitudinale des tubes d'échangeur de chaleur (24) et qui sont en liaison fluidique avec des extrémités spatialement opposées des tubes d'échangeurs de chaleur (24) de l'agencement de tubes de radiateur (21).

2. Four de cuisson à passage unique selon la revendication 1, **caractérisé en ce que** l'agencement de tubes de radiateur (21) est conçu de telle sorte que le milieu de chauffage s'écoule à travers tous les tubes d'échangeur de chaleur (24) dans des directions respectivement alternées.

3. Four de cuisson à passage unique selon la revendication 1 ou 2, **caractérisé en ce que** les tubes d'échangeur de chaleur (24) de l'agencement de tubes de radiateur (21) respectif sont conçus sous forme de faisceau de tubes ayant des tubes de longueur identique.

4. Four de cuisson à passage unique selon l'une des revendications 1 à 3, **caractérisé en ce que** l'agencement de tubes aller de milieu de chauffage (191) et/ou l'agencement de tubes retour de milieu de chauffage (22) comportent une ligne principale (20, 23) à partir de laquelle les lignes de dérivation (25, 26 ; 27, 28) s'étendent jusqu'aux tubes d'échangeur de chaleur (24), dans lequel la ligne principale (20, 23) s'étend parallèlement à une extension longitudinale des tubes d'échangeur de chaleur (24) de l'agencement de tubes de radiateur (21).

5. Four de cuisson à passage unique selon l'une des revendications 1 à 4, **caractérisé en ce qu'**un agencement de chaleur supérieure, d'une part, et un agencement de chaleur inférieure, d'autre part, peuvent être commandés indépendamment l'un de l'autre en ce qui concerne leur puissance de chauffage et/ou peuvent être chauffés indépendamment l'un de l'autre.

6. Four de cuisson à passage unique selon l'une des revendications 1 à 5, **caractérisé en ce que** les agencements de tubes de radiateur (21) du dispositif de chauffage à échangeur de chaleur (17) sont conçus comme agencement de chaleur supérieure (21ₒ) et/ou comme agencement de chaleur inférieure (2₁ᵤ).

7. Four de cuisson à passage unique (1) pour le mode de cuisson continu
- comportant un espace de cuisson à passage unique (3),
- comportant une pluralité de modules de four (2ᵢ) avec des tronçons d'espace de cuisson modulaire qui forment ensemble l'espace de cuisson de passage (3) entre un module de four initial (2₁) situé en premier dans une direction de transport (F) du produit à cuire et un module de four final (2_{N}) situé en dernier dans la direction de transport (F) du produit à cuire,
- un dispositif de transport de produit à cuire (11) pour le transport continu de produit à cuire entre le module de four initial (2₁) et le module de four final (2_{N}) dans la direction de transport de produit à cuire (F),
- un dispositif de chauffage à échangeur de chaleur (17) pour le chauffage indirect de l'espace de cuisson à passage unique (3) par l'intermédiaire d'un milieu de chauffage coulant,
- dans lequel le dispositif de chauffage à échangeur de chaleur (17) présente :
-- un agencement de tubes aller de milieu de chauffage avec un tronçon de tubes aller de milieu de chauffage (19),
-- un agencement de tubes retour de milieu de chauffage avec un tronçon de tubes retour de milieu de chauffage (22), et
-- au moins un agencement interposé de tubes de radiateur (42) avec un tronçon de tubes (44) pour guider le milieu de chauffage entre le tronçon de tubes aller de milieu de chauffage (19) et le tronçon de tubes retour de milieu de chauffage (22) et pour la dissipation de chaleur indirecte à l'espace de cuisson,
- dans lequel un tracé de l'agencement de tubes de radiateur (42) est en forme d'hélice et/ou de méandres de telle sorte que le milieu de chauffage s'écoule dans deux tronçons adjacents de tubes d'échangeur de chaleur (44₁ à 44₁₁) dans des directions d'écoulement mutuellement opposées.

8. Four de cuisson à passage unique selon l'une des revendications 1 à 7, **caractérisé par** un dispositif de chauffage par convection (31) pour le chauffage direct de l'espace de cuisson à passage unique (3) par l'intermédiaire d'un gaz de chauffage,
- dans lequel le dispositif de chauffage par convection (31) présente :
-- un agencement de tubes aller de gaz de chauffage (32),
-- un agencement de tubes retour de gaz de chauffage (34), et
-- au moins un agencement interposé de tubes de gaz de chauffage par convection (36) avec une pluralité de tubes de gaz de chauffage par convection (37), par l'intermédiaire desquels le gaz de chauffage s'écoule respectivement directement dans l'espace de cuisson (3).

9. Four de cuisson à passage unique selon la revendication 8, **caractérisé en ce que** les tubes d'échangeur de chaleur (24) du dispositif de chauffage d'échangeur de chaleur (17) et les tubes de gaz de chauffage par convection (37) du dispositif de chauffage par convection (31) sont logés de manière alternée les uns par rapport aux autres dans un faisceau de tubes (41).

10. Four de cuisson à passage unique selon la revendication 8 ou 9, **caractérisé en ce que** les tubes de gaz de chauffage par convection (37) présentent une pluralité d'orifices de passage (38) du côté d'enveloppe pour guider le gaz de chauffage dans le four de cuisson (3).
